(19) Europäisches Patentamt
European Patent Office
Office européen des brevets

(11) Publication number: **0 139 240**
**B1**

# (12) EUROPEAN PATENT SPECIFICATION

(45) Date of publication of patent specification: **11.01.89**

(51) Int. Cl.$^4$: **B 01 D 53/36,** B 01 J 23/40

(21) Application number: **84111383.0**

(22) Date of filing: **25.09.84**

## (54) Catalyst and method for treating exhaust gases.

(30) Priority: **27.09.83 US 536416**

(43) Date of publication of application:
**02.05.85 Bulletin 85/18**

(45) Publication of the grant of the patent:
**11.01.89 Bulletin 89/02**

(84) Designated Contracting States:
**AT BE CH DE FR GB IT LI NL SE**

(56) References cited:
**EP-A-0 080 929**
**DE-A-2 303 884**
**US-A-3 378 334**
**US-A-4 276 203**

(73) Proprietor: **UOP Inc.**
**10 UOP Plaza Algonquin & Mt. Prospect Roads**
**Des Plaines Illinois 60016 (US)**

(72) Inventor: **Onal, Isik**
**1025 South Fernandez**
**Arlington Heights Illinois 60005 (US)**

(74) Representative: **Brock, Peter William**
**UOP Processes International Corporation 48**
**Leicester Square**
**London WC2H 7LW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 139 240 B1

## Description

Background of the invention

(1) Field of the invention

The present invention relates to a catalytic composite and method for treating a combustible waste gas stream prior to discharging such stream into the atmosphere. The catalytic composite of the present invention possesses enhanced stability and activity as well as resistance to lead poisoning when effecting the conversion of auto exhaust gases or other lead-containing combustible waste gas stream of a noxious nature.

Description of the background information

Gaseous waste products resulting from the burning or combustion of hydrocarbonaceous fuels, such as gasoline and fuel oils, comprise carbon monoxide, hydrocarbons and nitrogen oxides as products of combustion or incomplete combustion, and pose a serious health problem with respect to pollution of the atmosphere. While exhaust gases from other carbonaceous fuel-burning sources, such as stationary engines, industrial furnaces, etc., contribute substantially to air pollution, the exhaust gases from automotive engines are a princpal source of pollution. In recent years, with the ever-growing number of automobiles powered by internal combustion engines, the discharge of waste products therefrom has been of increasing concern, particularly in urban areas where the problem is more acute, and the control thereof has become exceedingly important. Of the varous methods which have been proposed for converting the carbon monoxide, hydrocarbon and nitrogenoxide pollutants to innocuous products, the incorporation of a catalytic converter in the exhaust system holds the most promise of meeting the increasingly rigid standards established by the responsible governmental agencies.

In order to achieve the conversion of the carbon monoxide and hydrocarbon pollutants, it has become the practice to employ a catalyst in conjunction with a fuel-air ratio control means which functions in response to a feedback signal from an oxygen sensor in the engine exhaust gases. The fuel-air ratio control means is typically programmed to provide fuel and air to the engine in a ratio conducive to a near stoichiometric balance of oxidants and reductants in the hot exhaust gases at engine cruising conditions, and to a stoichiometric excess of reductants at engine idling and acceleration conditions. The result is that the composition of the gas with which the catalyst is contacted fluctuates almost constantly, such that conditions to which the catalyst is exposed are alternatively net reducing and net oxidizing. A catalyst for the oxidation of carbon monoxide and hydrocarbons must be capable of operating in such a dynamic environment.

Further, it is desirous to add compounds such as tetraethyl lead or tetramethyl lead to internal combustion engine fuel in order to allay knocking, i.e., the out of sequence detonation of the compressed charge. Unfortunately the catalyst employed in the catalytic converter are poisoned by the lead compounds. Catalytic composites which are resistant to lead poisoning have heretofore been proposed for the catalytic conversion of exhaust gases from an internal combustion engine. For instance U.S. Patent 3,304,150 to W. A. Stover et al. discloses a catalytic system possessing improved life and stability in the presence of volatile lead compounds contained in exhaust gases. The subject catalytic system includes ferric oxide which ingredient lends the lead resistance to the catalyst. The catalytic system also contains suitable active oxidation components such as cobalt, copper, manganese and palladium. The oxidation component and ferric oxide are impregnated upon a base or support such as alumina, silica-alumina, silica magnesia, zirconia, zirconia alumina, zirconia magnesia, and magnesia. The preferred base is a gamma-type alumina.

U.S. Patent 3,378,334 to H. S. Bloch likewise discloses a catalyst suitable for use for the oxidation of exhaust gases containing vaporized or entrained lead or lead compounds resulting from the combustion of leaded gasolines. In particular, the subject catalyst comprises a high surface or refractory inorganic oxide base or support such as alumina, alumina silica, alumina zirconia, etc., upon which is deposited by precipitation or impregnation techniques, one or more catalytically active metals or metal oxides, in particular, metals of the platinum group family. The preferred refractory oxide contains a major proportion of alumina. An oxide such as silica, titania, zirconia, hafnia or a mixture of two or more of such oxides may be incorporated with the alumina in an amount within the range of about 0.1 to about 30 wt.%. Improved results as to lead poisoning resistance of the catalyst is attributed to maintaining a low average bulk density (ABD) of less than about 0.4 $g/cm^3$ of catalyst and more particularly, an ABD within the range of about 0.15 to about 0.35 $g/cm^3$. Supposedly such a structure is characterized by a high percentage of macropores which can adsorb substantial quantities of lead without obstructing active catalytic sites. In any event the carrier material preferably comprises a major portion of alumina, and, for instance, from 0.5 to about 30 wt.% silica based on the carrier material or a major proportion of alumina plus about 0.1 to about 10 wt.% zirconia based on the carrier material. It is preferred that the zirconia be incorporated in an amount ranging from 0.5 to 5 wt.%.

U.S. Patents 3,409,390 to J. Hoekstra discloses a catalytic composite having a longer life and enhanced stability as well as resistance to lead absorption and lead poisoning when effecting the conversion of auto exhaust gases or other lead-containing combustible waste gases. Specifically patentee maintains that an alkaline earth component particularly, barium, calcium, and strontium when incorporated into the catalytic

composite is critically important in improving the stability or life of the catalyst as well as decreased lead pick-up when the catalyst is subjected to exhaust gas fumes from engines using leaded fuels. The catalytic composite disclosed in the present reference also contains a catalytically active metal component or components composited with a refractory oxide material possessing an ABD of less than 4 $g/cm^3$. The catalytically active metal components composited with the refractory inorganic oxide may be one or more of the following; vanadium, chromium, molybdenum, tungsten, members of the iron group and platinum group of the periodic table, copper, silver and gold. Suitable inorganic oxides include silica, boria, thoria, titania, zirconia, hafnia and mixtures of two or more. The preferred inorganic oxide is alumina or if employed in conjunction with another inorganic oxide, such other inorganic oxide is present in an amount within the range of 0.5 to about 25% by weight.

U.K. Patent application 2 070 958 further discloses an exhaust gas catalyst resistant to lead compound poisoning. Specifically the catalyst comprises one or more platinum group metals and a base metal component deposited upon a substrate coated with refractory metal oxide. The preferred refractory metal oxide is alumina.

U.S. Patent 4,233,189 to Gandhi et al. related to the use of zirconia as a washcoat material to minimize an interaction between rhodium and the washcoat to maintain a higher rhodium dispersion on a catalyst substrate. Rhodium is the active metal employed in the reduction of oxides of nitrogen contained in exhaust gases. Rhodium apparently does not dissolve as readily into a zirconia washcoat as compared to an alumina washcoat. Patentee points out that despite the fact that zirconia possesses a relatively low surface area, the need for a high surface area washcoat was not as critical anymore since the contaminant levels of lead and phosphorus in gasoline have decreased from 0.33 g/gal Pb to 0.003 g/gal Pb (0.0095 to 0.00095 g/l). Higher surface area washcoats, such as alumina provided a sink for the distribution of the lead contaminants, thereby decreasing the probability of poisoning active metal components of exhaust gas catalysts.

Finally, U.S. Patent 4,316,822 to Fujitani et al. discloses a catalyst for reducing nitrogen oxides, carbon monoxide, and hydrocarbons in exhaust gases which catalyst comprises a porous carrier of ceramic selected from the group consisting of alumina and alumina-magnesia spinel; and a catalyst ingredient supported thereon consisting essentially of zirconium oxide, cerium oxide and a metal selected from the group consisting of platinum, palladium and mixtures thereof. The zirconia and cerium oxide supported on the carrier are preferably present in amounts of 0.6 g to 100 g liter carrier, and 0.8 to 170 g per liter carrier, respectively.

Summary of the invention

It has now been discovered that when zirconia is present in an oxidation catalyst support material in a specified amount, the zirconia provides an oxidation catalyst with improved resistance to lead poisoning when the catalyst is used to effect the oxidation of the CO and hydrocarbon components in lead-containing exhaust gases.

According to one embodiment, this invention relates to a lead-resistant exhaust gas oxidation catalyst composite comprising a honeycomb type ceramic or metal carrier, a thin film of an oxide support on the carrier, and a catalytic metal component selected from platinum, palladium, iridium and mixtures thereof disposed in said oxide support.

According to the invention, the oxide support is zirconia-alumina, the molar ratio of zirconia to catalytic metal component being greater than 20:1, and the zirconia:alumina weight ratio being greater than 1:2.

According to a further embodiment, a zirconia-containing overcoat is deposited on the oxide support.

In another aspect the present invention provides a method for effecting the oxidation of noxious exhaust gases comprising carbon monoxide and hydrocarbons by contacting them with a catalyst composite as defined above.

The exhaust gases can, for example, be derived from an internal combustion engine operating upon fuel containing at least .01 g/liter of lead.

Catalyst composites comprising platinum and/or palladium as the catalytic components have heretofore been proposed for the catalytic oxidation of exhaust gases from an internal combustion engine. Frequently, the catalyst composite will further comprise a base metal component, such as nickel, where the base metal is defined as a metal selected from the group excluding the platinum group metals and gold.

The catalytic components are typically supported on a refractory inorganic oxide support. US—A—3304150 broadly teaches the use of a support such as alumina, silica-alumina, silica magnesia, zirconia, zirconia-alumina, zirconia magnesia, magnesia, but the preferred support is alumina. GB—A—2070958 likewise teaches the preferred use of alumina as a support (see also US—A—3378334 and —3409390). These latter documents further teach that other refractory oxides may be incorporated with alumina in connection with lead tolerant oxidation catalyst systems, but the amounts of such other refractory inorganic oxides should be limited to 30 wt.% or 25 wt.%, respectively. In fact, US—A—3378334 specifically points out that if zirconia is incorporated with the alumina, it should be limited in the preferred amount to less than 5 wt.%. US—A—4323542 also teaches the addition of other refractory inorganic oxides such as silica, zirconia and magnesia in minor proportions to alumina.

In contradistinction to the prior art teachings, when zirconia is present in the catalyst support in amounts such that the zirconia to oxidation catalytic component molar ratio is greater than 20:1 and the

zirconia to alumina weight ratio is greater than 1:2, the zirconia imparts substantial lead resistance qualities to the oxidation catalyst.

Contrary to the teachings of US—A—4233189, the present invention involves an oxidation catalyst comprising a high zirconia content catalyst support which oxidation catalyst can be readily used with lead-containing exhaust gases. US—A—4233189 is concerned with a reduction/oxidation catalyst which employs rhodium with a washcoat consisting essentially of zirconia. Patentee points out that the zirconia washcoat can be used because gasoline lead content has been decreased to from 0.03 to 0.003 g/gal (0.0095 to 0.00095 g/liter). The catalyst of the present invention, in its embodiment which may be used with a noxious gas containing low or no lead, may not contain rhodium.

Further, contrary to the teachings of US—A—4233189, the present invention in one aspect involves a process for the oxidation of carbon monoxide and hydrocarbons, and the reduction of oxides of nitrogen contained in an exhaust gas from an internal combustion engine operating upon a fuel containing at least 0.01 g/L lead.

The features of the process of the present invention are in direct contradistinction to the teachings of US—A—4233189 which cautions against the use of a zirconia washcoat to support rhodium in a lead-containing exhaust gas environment.

US—A—4,316,822 is likewise silent with respect to the lead resistance features afforded by the use of zirconia in the catalyst support in amounts prescribed by the present invention. The exhaust gas employed by patentee in the examples does not contain any lead compounds. Patentee's catalyst essentially contains cerium oxide which is not a required ingredient in the present invention catalyst.

Without wishing to be bound by the details of any specific theory regarding the mechanism of the invention an attempt is made below to explain a possible mechanism of the invention. It is speculated that the sulfur in the fuel is converted to $SO_2$ in the internal combustion engine exhaust gas which $SiO_2$ is in turn oxidized to $SO_3$ by the oxidation component in the catalytic composite. Subsequently $PbSO_4$ is formed at the oxidation component catalytic site; $PbSO_4$ being less deleterious to the oxidation component catalytic function. When aluminum is present in the catalyst support $Al_2(SO_4)_3$ preferentially forms at exhaust gas temperatures thereby inhibiting the formation of the desirable $PbSO_4$ species. $Zr(SO_4)_2$ on the other hand, does not form at exhaust gas temperatures; thus freeing the sulfur to form the innocuous $PbSO_4$ species. Accordingly, the presence of zirconia in the requisite amounts in the catalytic support affords the lead tolerant features to the oxidation catalyst.

The lead resistant catalytic composite of the present invention comprises one or more metal(s) selected from the group consisting of platinum, palladium and iridium dispersed on a zirconia-containing support material. The support material comprises zirconia-alumina, wherein the zirconia is present in an amount such that the zirconia to catalytic metal component molar ratio is greater than 20:1. The zirconia to alumina weight ratio must be greater than 1:2.

The zirconia-containing support material utilized in accordance with the present invention may contain other refractory inorganic oxides such as silica, magnesia, boria, thoria, titania and hafnia. The preferred additional refractory inorganic oxide is alumina. The alumina may be any of the various hydrous aluminum oxides or alumina gels such as boehmite, gibbsite, bayerite, and the like. Activated aluminas, such as have been thermally treated at a temperature in excess of about 400°C, with the elimination of at least a portion of the chemically and/or physically combined water and hydroxyl groups commonly associated therewith, are particularly suitable. The preferred alumina is substantially pure gamma or eta-alumina.

The zirconia-containing oxidation catalyst support may also contain a thermal stabilizer such as $Y_2O_3$, CaO, MgO and BaO.

The zirconia-containing support used according to the present invention is disposed as a thin film on an inert honeycomb-type ceramic or metal carrier, which provides the structural support for the refractory inorganic oxide. Ceramic materials are a preferred class of carrier material. Examples of suitable ceramic materials include: sillimanite, petalite, cordierite, mullite, zircon, zircon mullite, spodumene, alumina-titanate, etc. The carrier material can best be utilized in any rigid, unitary honeycomb configuration which provides a plurality of pores or channels therethrough extending in the direction of gas flow. The carrier material can be used advantageously in either unitary form, or as an arrangement of multiple modules. The carrier material can be oriented such that gas flow is generally in the same direction as the cells or channels of the carrier material, or the gas can flow through the carrier material in a transverse or radial manner. For a more detailed discussion of monolithic structures, refer to US—A—3785998 and —3767453. The carrier material may also be made of any metal (including alloys) such as those disclosed in GB—A—2013517 which can be fabricated into the desired honeycomb form, are oxidation resistant and are otherwise capable of withstanding high temperatures.

The surface area of the carrier material is not critical to the method of this invention. It is preferred that the micropore volume of the carrier material be relatively low, and it is especially preferred that the carrier material have a macropore distribution such that at least 90% of the pore volume is in pores having a diameter of greater than about 2000 Å. The surface area of the monolithic structure, as opposed to the carrier material of which the structure is made, should be maximized consistent with pressure drop limitations in the particular embodiment of the method of this invention selected. It is preferred that the surface area of the monolithic structure be from 50 to 1000 square meters per liter of structure, as measured by $N_2$ adsorption, where the volume of the structure is measured by its exterior dimensions. The

geometric surface area of the monolithic structure, in terms of cell density, should be maximized consistent with pressure drop limitations, and is preferably in the range of from 200 to 800 cells per square inch (31 to 124 cells per $cm^2$) of cross-sectional area of the structure.

The zirconia-containing catalyst support material can be deposited on the carrier material by any conventional or convenient means such as by dipping the carrier in a zirconia-containing slurry. It is preferred that the zirconia deposit be in the form of a film of from 0.0003 to 0.01 inches (0.007 to 0.25 mm) thick. It is also preferred that the zirconia be present on the carrier material in amounts in the range of from 800 to 9000 gms per cubic foot (28.27 to 318.02 Kg/$m^3$) of carrier, where the volume is measured by the exterior dimensions of the carrier material.

The catalyst composite of this invention further comprises the catalytic components; platinum, palladium, and/or iridium, and may contain rhodium when the catalyst is used for an exhaust gas derived from fuel containing at least 0.01 g/L of lead.

The catalytic components can be incorporated in the catalyst composite in any suitable manner in or on the refractory inorganic oxide, such as by coprecipitation, cogellation, ion-exchange, or impregnation by soaking, dipping, immersion, or otherwise. The preferred method of preparing the catalyst involves the utilization of a soluble, decomposable compound of the particular catalytic component to impregnate the refractory inorganic oxide in a relatively uniform manner. For example, the platinum and/or palladium component may be added to the zirconia by mixing the latter with an aqueous solution of chloroplatinic and/or chloropalladic acid. The chloroplatinic acid and chloropalladic acid (when both are used) can be in common aqueous solution, or in separate aqueous solutions. In the latter instance the mixing of the zirconia with the solutions can be performed sequentially in any order. Other water-soluble compounds or complexes may be employed in impregnation solutions and include ammonium chloroplatinate, bromoplatinic acid, platinum trichloride, platinum tetrachloride hydrate, platinum dichlorocarbonyl dichloride, dinitrodiaminoplatinum, sodium tetranitroplatinate, palladium chloride, palladium nitrate, palladium dioxide, diamminepalladium hydroxide, and tetramminepalladium chloride.

The utilization of a platinum or palladium chlroide compound, such as chloroplatinic or chloropalladic acid or iridium trichloride hydrate, is ordinarily preferred. Hydrogen chloride, nitric acid, or the like acid can be added to the solution in order to further facilitate the uniform distribution of the metallic components throughout the zirconia-containing support material. In addition, it is generally preferred to dispose the catalytic components on the zirconia-containing support material after it has been calcined in order to minimize the risk of washing away the valuable metal compounds; however, in some cases it may be advantageous to dispose the catalytic components on the refractory inorganic oxide when it is in a gelled state.

Likewise, when a rhodium component is incorporated with the catalytic composite in connection with the process purifying leaded fuel exhaust gas, the rhodium component may be added to the zirconia-containing support by commingling the latter with an aqueous solution of rhodium trichloride. Other water soluble compounds or complexes of rhodium may be employed, such as hexamminerhodium chloride, rhodium carbonylchloride, rhodium trichloride hydrate rhodium nitrate, sodium hexachlororhodate, and sodium hexanitrorhodate.

Further, when an iridium component is incorporated into the composite, the iridium component may be added to the zirconia-containing support by commingling the latter with an aqueous or anhydrous alcoholic solution of iridium salts such as:

$H_2IrCl_6$, $H_3IrCl_6$, $HIrCl_2(OH)_2$, $(NH_4)_3IrCl_6$,
$(NH_4)_2IrCl_5(H_2O)$, $[Ir(NH_3)_4Cl_2]Cl$, $[Ir(NH_3)_5H_2O)]Cl_3$.

The catalytic components are deposited upon the monolith as described above, the component loading preferably being such that it ranges from 10 to 100 g/$ft^3$ (35.3 to 353 g/$m^3$) monolith.

The catalyst composite of this invention is suitable for use in a converter or a reactor of through-flow, cross-flow, or radial-flow design installed in the exhaust line of an internal combustion engine. The converter or reactor may be employed in series with a subsequent oxidation converter or reactor with combustion air being injected ahead of the oxidation converter to insure conversion of the residual carbon monoxide and hydrocarbons remaining in the exhaust gases.

The following examples illustrate the improvement in carbon monoxide and hydrocarbon oxidation to be derived through practice of the present invention.

Example I

In this example the performance of various high zirconium-content catalytic composites prepared in accordance with the present invention was compared with the performance of conventional alumina supported catalysts in connection with the use of leaded fuel.

The catalytic composites were tested for oxidation activity in an engine dynamometer test. The oxidation activity test consists of a measure of the sustained performance (the % conversion of oxidizable compound in the exhaust gas) at two different operating regimes. These operating regimes simulate an acceleration condition and a cruise condition for an internal combustion engine.

Table I below sets out the test condition for the dynamometer test described below.

TABLE I
Test conditions

| | Acceleration | Cruise |
|---|---|---|
| % CO | 2.0 | 0.2 |
| % $O_2$ | 4.8 | 5.3 |
| A/F ratio | 17/1 | 19/1 |
| Inlet temperature °C | 371 | 371 |

Fuel concentration/liter
.15 grams Pb
1 milligram P
200 ppm sulfur-tetrahydrothiophene

Prior to carrying of the above-described oxidation test the catalytic composites were aged for 300 hours in an aging cycle designed to simulate vehicle aging of oxidation catalysts in a high lead content environment. The aging cycle consists of idle, cruise, and high cruise modes of operation. Table II below elucidates the conditions employed in the aging sequence.

TABLE II
Aging cycle

| | | | |
|---|---|---|---|
| Inlet temperature (°C) | 454±14 | 760±14 | 593±56 |
| Inlet CO (%) | 0.1—0.2 | 0.1—0.3 | 0.1—0.2 |
| Inlet $O_2$ (%) | 2±0.5 | 1.5±0.5 | 2.0±0.5 |

Aging Fuel: Indolene containing 570 mg Pb/gal (180 g/l), 4 mg P/gal. (1.27 g/l), 250 wt. ppm S

To illustrate the favorable lead tolerant features of the high zirconia content catalyst of the present invention over the conventional alumina-containing catalyst the following samples were prepared.

The conventional alumina supported catalyst was prepared by impregnating 300 g of gamma-alumina with 3.74 g of chloroplatinic acid solution (28.9 wt.% Pt) in excess water (1600 ml). The platinum-impregnated gamma-alumina was subsequently dried at about 100°C in a rotary evaporator. After the drying steps the platinum-impregnated gamma-alumina was calcined for 1 hour at 1000°F (538°C) in a direct fired furnace. The calcination step was followed by a reduction step at 500°C in a $H_2$ atmosphere for 2 hours. The 300 g of platinum-impregnated alumina was slurried with 500 g of $H_2O$ and 19 g of concentrated $HNO_3$ and ball-milled for 2 hours. A 2.66 inch (6.76 cm) diameter, 3 inch (7.62 cm) long 300 channel per square inch (46.5 channel per $cm^2$) cordierite monolith was dipped into the above-described slurry followed by a blow out of the excess slurry. The monolith was subsequently calcined for 1 hour at 1000°F (538°C). The above dipping and calcining steps were repeated until the catalytic composite contained 10 g platinum per cubic foot (0.35 $Kg/m^3$) which was equivalent to a total washcoat loading of 2782 $g/ft^3$ (98.3 $Kg/m^3$). This conventional alumina-washcoat catalyst was designated catalyst "A".

A catalyst composite comprising a support material containing 50 wt.% of zirconia and 50 wt.% of alumina was prepared as elucidated by the following steps. A platinum impregnated alumina slurry was prepared as described in the preparation method for catalyst "A" above. A platinum impregnated zirconia slurry was prepared in the same manner as the platinum impregnated alumina described above. 150 g of platinum impregnated zirconia was slurried with 150 g of $H_2O$ and 4 g of concentrated $HNO_3$. The slurry was ball-milled for 2 hours. 150 g of platinum impregnated alumina was slurried with 250 g of $H_2O$ and 10 g of concentrated $HNO_3$. The zirconia slurry was mixed with the alumina slurry and ball-milled for 1.5 hours. Thereafter the dipping and calcination steps were carried out and repeated as described above in the preparation method for catalyst "A" until the catalytic composite contained 10 g of platinum per cubic foot (353 $g/m^3$). The zirconia to platinum molar ratio in the present catalyst was 439. This 50/50 zirconia-alumina catalyst is designated as catalyst "B".

Catalyst "C" was prepared exactly as catalyst "A" except that the platinum loading was 3.02 g (28.89 wt.% chloroplatinic acid) per 150 g alumina. The washcoat loading was carried out such that it was about 0.6 times that of catalyst "A", about 1900 $g/ft^3$ (67.1 $Kg/m^3$). 300 g of gamma-alumina were slurried with 500 g of water, and 19 g of concentrated $HNO_3$. Thus slurry was ball-milled for 2 hours. The above washcoat monolith was dipped into the slurry with the excess slurry blown out. The dipped monolith was thereafter calcined for 1 hour at 1000°F (538°C). The dipping and calcining steps were repeated until the total alumina

loading was the same as that of catalyst "A", about 2800 g/ft$^3$ (98.9 Kg/m$^3$). This alumina coating was termed an overcoat. Catalyst "C" also contained 10 g platinum per cubic foot.

Catalyst "D" containing a zirconia overcoat was prepared by the following procedure. The same procedure was that employed in the preparation of catalyst "C" wherein an alumina washcoat loading of about 0.6 times that of the pure alumina washcoat loading of catalyst "A" was carried out. 300 g of zirconia was mixed with 200 g of water plus 8 g of concentrated $HNO_3$. This slurry was ball-milled for 6 hours. The above-described monolith was then dipped into the slurry with excess slurry subsequently blown out. The dipped monolith was thereafter calcined for 1 hour at 1000°F (538°C). The dipping and calcination steps were repeated until the total alumina plus zirconia and platinum loadings were the same as that of catalyst "C".

The hydrocarbon and carbon monoxide conversions were measured after the above-described 300 hour aging cycle. The conversions were measured at acceleration and cruise conditions. "HCA" denotes conversion of hydrocarbons at acceleration conditions. "COA" and "COC" denote conversion of CO at acceleration and cruise conditions respectively. Table III below sets out the results obtained.

The tabulated data clearly shows that catalysts "D" and "B" afford superior conversions after "lead aging" over the conventional alumina washcoat catalyst in virtually all modes of operations. Surprisingly, catalyst "D" which contains only a zirconia overcoat also affords superior results. Apparently merely the presence of zirconia and not necessarily the manner in which it is disposed upon the cordierite monolith promotes the lead-tolerant effects.

TABLE III

| | 100% $Al_2O_3$ washcoat | 50%:50% $ZrO_2$:$Al_2O_3$ washcoat | $Al_2O_3$ overcoat | $ZrO_2$ overcoat |
|---|---|---|---|---|
| Catalyst | A | B | C | D |
| HC A | 63 | 70 | 53 | 68 |
| CO A | 97 | 98 | 90 | 97 |
| HC C | 64 | 70 | 67 | 70 |
| CO C | 90 | 92 | 90 | 93 |

Example II

The present example serves to show the performance of the high zirconia-content catalytic composites of the present invention when the carrier employed is metallic. The composites were prepared in substantially the same manner as described in Example I. The metallic monolith possessed 400 squares per square inch (62 squares/cm$^3$) with a 2.75 inch (7.0 cm) diameter and a 3 inch (7.6 cm) length. Each composite washcoat was preimpregnated with platinum at a loading of 10 g/ft$^3$ (353 g/m$^3$).

Catalyst "E" contained a conventional gamma-alumina washcoat at a loading level of 2920 g/ft$^3$ (103.2 Kg/cm$^3$) Alseal 500® is a high temperature, corrosion and oxidation resistant coating material that contains aluminium powder in an organo-inorganic ceramic binder) was applied to the metallic monolith prior to application of the washcoat in order to facilitate adhesion.

Catalyst "F" contained a precoat of Alseal 500® (0.1 g/in$^3$—0.0061 g/cm$^3$) and gamma-alumina (0.17 g/in$^3$, 0.01 g/cm$^3$). The washcoat contained 90% stabilized zirconia and 10% alumina at a loading of 3197 g/ft$^3$ (113.0 Kg/m$^3$).

The following Table IV contains the results of the engine dynamometer oxidation tests of the catalysts. The zirconia-containing washcoat demonstrated superior conversion performance to the alumina washcoat when deposited upon a metallic carrier.

TABLE IV

| | 90%:10% $ZrO_2$:$Al_2O_3$ | 100%-alumina |
|---|---|---|
| Catalyst | F | E |
| HC A | 70 | 55 |
| CO A | 96 | 83 |
| HC C | 70 | 47 |
| CO C | 91 | 74 |

**Claims**

1. A lead-resistant exhaust gas oxidation catatalyst composite comprising a honeycomb-type ceramic or metal carrier, a thin film of an oxide support on the carrier, and a catalytic metal component selected from platinum, palladium, iridium and mixtures thereof dispersed in said oxide support, characterized in that said oxide support is zirconia-alumina, the molar ratio of zirconia to catalytic metal component being greater than 20:1, and the zirconia:alumina weight ratio being greater than 1:2.

2. A catalyst composite according to claim 1 characterized in that a zirconia-containing overcoat is deposited on the oxide support.

3. A method for effecting oxidation of noxious exhaust gases comprising a carbon monoxide and hydrocarbons by contacting said gases at oxidation conditions with a catalyst, characterized in that the catalyst is a catalyst composite according to claim 1 or 2.

4. A method according to claim 3 characterized in that the gases are produced by an internal combustion engine operating upon fuel containing at least 0.01 g/l of lead.

**Patentansprüche**

1. Bleibeständiger zusammengesetzter Abgasoxidationskatalysator mit einem Keramik- oder Metallträger vom Honigwabentyp, einem dünnen Film einer Oxidunterstützung auf dem Träger und einer katalytischen Metallkomponente, die unter Platin, Palladium, Iridium und Gemischen derselben ausgewählt ist und in der Oxidunterstützung dispergiert ist, dadurch gekennzeichnet, daß die Oxidunterstützung Zirkoniumoxid-Aluminiumoxid ist, wobei das Molverhätlnis von Zirkoniumoxid zu katalytischer Metallkomponente größer als 20:1 ist und das Gewichtsverhältnis von Zirkoniumoxid zu Aluminiumoxid größer als 1:2 ist.

2. Zusammengesetzter Katalysator nach Anspruch 1, dadurch gekennzeichnet, daß auf der Oxidunterstützung ein zirkoniumoxidhaltiger Überzug abgelagert ist.

3. Verfahren zur Oxidation schädlicher Abgase, die Kohlenmonoxid und Kohlenwasserstoffe umfassen, durch Behandlung dieser Gase bei Oxidationsbedingungen mit einem Katalysator, dadurch gekennzeichnet, daß der Katalysator ein zusammengesetzter Katalysator nach Anspruch 1 oder 2 ist.

4. Verfahren nach Anspruch 3, dadurch gekennzeichnet, daß die Gase durch einen Verbrennungsmotor erzeugt werden, der mit Treibstoff arbeitet, welcher wenigstens 0,01 g/l Blei enthält.

**Revendications**

1. Composite catalytique pour l'oxydation der gaz d'échappement, résistant au plomb, comprenant un support de type en nid d'abeilles en matière céramique ou en métal, une couche mince d'un oxyde porteur déposé sur le support, et un métal catalytique choisi parmi le platine, le palladium, l'iridium et leurs mélanges qui est dispersé dans ledit oxyde porteur, caractérisé en ce que ledit oxyde porteur est de la zircone-alumine, le rapport molaire de la zircone au métal catalytique étant supérieur à 20:1, et le rapport en poids zircone:alumine étant supérieur à 1:2.

2. Composite catalytique selon la revendication 1, caractérisé en ce qu'une sur-couche contenant de la zircone est déposée sur l'oxyde porteur.

3. Procédé pour effectuer l'oxydation de gaz d'échappement nocifs comprenant du monoxyde de carbone et des hydrocarbures en mettant lesdits gaz en contact avec un catalyseur dans des conditions d'oxydation, caractérisé en ce que le catalyseur est un composite catalytique selon la revendication 1 ou 2.

4. Procédé selon la revendication 3, caractérisé en ce que les gaz sont produits par un moteur à combustion interne alimenté par du carburant contenant au moins 0,01 g/l de plomb.